# EUROPEAN PATENT APPLICATION

(11) **EP 4 760 876 A1**
(43) Date of publication of application: **17.06.2026**
(21) Application number: 25857252.8
(22) Date of filing: 05.08.2025
(51) Int. Cl.: H01M 10/65, H01M 10/613, H01M 50/204, H01M 50/271, H01M 50/249

(54) **BATTERY PACK, VEHICLE INCLUDING SAME, AND METHOD FOR MANUFACTURING SAME**

(30) Priority: 20.08.2024 KR 20240110950
(71) Applicant: LG Energy Solution, Ltd., Seoul 07335 (KR)
(72) Inventor: KIM, Taewoo, Daejeon 34122 (KR)
(74) Representative: Plasseraud IP
(86) International application number: PCT/KR2025/011704
(87) International publication number: WO 2026/043163

(57) **Abstract**

A battery pack according to one embodiment of the present invention comprises: a plurality of battery cell units; a pack case for accommodating the plurality of battery cell units; a first thermal resin applied to at least a portion of a first surface of the pack case facing the plurality of battery cell units; a second thermal resin applied to at least a portion of a second surface of the plurality of battery cell units facing the pack case; and at least one of a phase change material and a third thermal resin applied to at least a portion of a third surface of the plurality of battery cell units opposite the second surface. (Representative Drawing: Fig. 7)

## Description

### [TECHNICAL FIELD]

The present invention relates to a battery pack, a vehicle, and a method for manufacturing a battery pack.

### [BACKGROUND ART]

Secondary batteries, which exhibit high applicability across product groups and possess electrical characteristics such as high energy density, are not only used in portable devices but are also widely applied to electric vehicles (EVs) or hybrid electric vehicles (HEVs) driven by electrical power sources.

These secondary batteries are attracting attention as a new energy source for promoting environmental friendliness and energy efficiency because they not only have the primary advantage of drastically reducing the use of fossil fuels, but also have the advantage of producing no byproducts from energy use.

Types of secondary batteries widely used today include lithium-ion batteries, lithium polymer batteries, nickel-cadmium batteries, nickel-hydrogen batteries, and nickel-zinc batteries. The operating voltage of a single secondary battery cell, i.e., a unit battery cell, is approximately 2.5 V to 4.6 V. Accordingly, when a higher output voltage is required, a battery pack may be configured by connecting a plurality of battery cells in series. In addition, a battery pack may be configured by connecting a plurality of battery cells in parallel depending on the charge/discharge capacity requirements. Therefore, the number of battery cells incorporated in the battery pack may be variously set according to the required output voltage or charge/discharge capacity.

In configuring a battery pack including a plurality of battery cells connected in series and/or in parallel, it is general practice to first configure a battery module consisting of at least one battery cell, preferably, a plurality of battery cells, and then to construct a battery pack using at least one such module together with other components. Here, a battery module is a unit composed of a plurality of battery cells connected in series or in parallel, while a battery pack consists of a plurality of battery modules interconnected in series or in parallel to enhance the overall capacity and output.

Meanwhile, a method of manufacturing battery packs by employing the cell-to-pack (CTP) method is being developed. Cell-to-pack (CTP) is a technology that reduces the proportion of modules in the process of packaging battery cells, thereby accommodating a larger number of battery cells directly within the package. For example, if an electric vehicle is equipped with about 100 battery cells, ordinarily about 10 battery cells are bundled into one battery module, and multiple such battery modules are then assembled into a single battery pack to be mounted in the electric vehicle. In the CTP method, however, the battery cells are directly assembled inside the battery pack without employing a separate module. By eliminating the battery module in this manner, additional space can be secured, thereby increasing energy density and capacity; furthermore, the reduced number of components contributes to cost savings.

However, the CTP method, due to its high energy density, also entails the drawback of increased heat generation, making it difficult to maintain product quality management and productivity.

### [SUMMARY OF THE INVENTION]

### [TECHNICAL PROBLEM]

It is an object of the present invention to absorb heat that is rapidly generated inside a battery pack and to stably maintain a proper temperature.

Another object of the present invention is to prevent battery cells from being damaged or separated during the assembly of the battery pack.

However, the technical objects to be solved by the present invention are not limited to those set forth above, and other objects not expressly mentioned will be clearly understood by those skilled in the art from the following description of the invention.

### [SOLUTION TO THE PROBLEM]

A battery pack according to one embodiment of the present invention comprises: a plurality of battery cell units; a pack case for accommodating the plurality of battery cell units; a first thermal resin applied to at least a portion of a surface of the pack case facing the plurality of battery cell units; a second thermal resin applied to at least a portion of a first surface of the plurality of battery cell units facing the pack case; and at least one of a phase change material (PCM) and a third thermal resin applied to at least a portion of a second surface of the plurality of battery cell units opposite the first surface.

Here, the pack case may further include a base portion for supporting the plurality of battery cell units, and a sidewall portion extending from an edge of the base portion and configured to cover a side surface of the plurality of battery cell units. The first thermal resin may be applied along a direction on one surface of the base portion facing the battery cell unit.

The plurality of battery cell units may include a plurality of battery cells stacked in at least one direction and a support frame configured to maintain the shape of the plurality of battery cells.

The second thermal resin may be applied along a direction orthogonal to the direction in which the first thermal resin is applied.

The battery cell unit may be accommodated inside the pack case such that the second thermal resin is in contact with the first thermal resin.

Additionally, in another aspect of the present invention, both the phase change material and the third thermal resin may be applied on the second surface of the plurality of battery cell units.

Moreover, the battery pack may further comprise a case cover coupled to the pack case and configured to cover the plurality of battery cell units accommodated inside the pack case. The case cover may be coupled to the pack case such that it comes into contact with at least one of the phase change material and the third thermal resin.

In addition, the present invention provides a vehicle comprising at least one battery pack according to the aforementioned embodiment.

Meanwhile, the present invention provides a method of manufacturing a battery pack, the method comprising the steps of: assembling a battery cell unit; applying a first thermal resin in one direction on a base portion of a pack case that accommodates the battery cell unit; applying a second thermal resin to a first surface of the battery cell unit facing the base portion of the pack case; applying at least one of a phase change material and a third thermal resin to a second surface of the battery cell unit opposite to the first surface; and accommodating the battery cell unit inside the pack case.

The battery cell unit may be accommodated in the pack case such that the second thermal resin applied to the first surface of the battery cell unit is in contact with the first thermal resin.

The second thermal resin may be applied along a direction orthogonal to the direction in which the first thermal resin is applied.

Furthermore, in another aspect of the present invention, both the phase change material and the third thermal resin may be applied on the second surface of the battery cell unit.

In addition, the method of manufacturing the battery pack may further comprise the step of covering the plurality of battery cell units accommodated inside the pack case by coupling a case cover to the pack case such that the case cover is in contact with at least one of the phase change material and the third thermal resin.

### [ADVANTAGEOUS EFFECTS OF THE INVENTION]

According to the present invention, heat that is rapidly generated inside the battery pack can be absorbed so as to stably maintain an appropriate temperature.

In addition, the present invention can effectively prevent battery cells from being damaged or separated during the assembly of the battery pack.

However, the advantageous effects of the present invention are not limited to those described above, and other technical effects not explicitly mentioned will be clearly understood by those of ordinary skill in the art from the following description.

### [BRIEF DESCRIPTION OF DRAWINGS]

The accompanying drawings, which are incorporated in and constitute a part of this specification, illustrate preferred embodiments of the present invention and, together with the detailed description set forth below, serve to further clarify the technical idea of the present invention. However, the present invention should not be construed as being limited to the matters illustrated in these drawings.
FIG. 1 is a view illustrating a battery pack according to one embodiment of the present invention.
FIG. 2 is a view illustrating the first thermal resin applied to the base portion of the pack case used in the battery pack of FIG. 1.
FIG. 3 is a view illustrating a battery cell unit accommodated in the battery pack of FIG. 1.
FIG. 4 is a view illustrating the battery cells constituting the battery cell unit of FIG. 3.
FIG. 5 is a series of views illustrating the second thermal resin and the phase change material (PCM) or the third thermal resin applied to the battery cell unit of FIG. 3.
FIGS. 6 and 7 are views illustrating a method of manufacturing the battery pack of FIG. 1.
FIG. 8 is a view illustrating a vehicle including at least one battery pack of FIG. 1.

### [MODES FOR CARRYING OUT THE INVENTION]

The advantages and features of the present invention, and the methods of achieving them, will become apparent with reference to the embodiments described in detail below in conjunction with the accompanying drawings. However, the present invention is not limited to the embodiments disclosed herein but may be implemented in various forms. These embodiments are provided only to ensure that the disclosure of the present invention is complete and to fully inform a person of ordinary skill in the art of the scope of the invention. The present invention is defined only by the scope of the claims. Accordingly, in some embodiments, well-known process steps, device structures, and technologies may not be described in detail to avoid obscuring the present invention. Throughout the specification, like reference numerals refer to like elements.

In the drawings, the thicknesses of layers and regions may be exaggerated to clearly show multiple layers and regions. Throughout the specification, similar parts are designated by the same reference numerals. When an element such as a layer, film, region, or plate is referred to as being "on" another element, it can be directly on the other element or intervening elements may be present. In contrast, when an element is referred to as being "directly on" another element, it is to be understood that there are no intervening elements present. Similarly, when an element is referred to as being "under" another element, it can be directly under the other element or intervening elements may be present. Conversely, when an element is referred to as being "directly under" another element, it is to be understood that there are no intervening elements present.

A statement that two subjects being compared are the same means that they are 'substantially identical.' Accordingly, 'substantial identity' may encompass variations within a tolerance deemed acceptable by one of ordinary skill in the art, for instance, a deviation of 5% or less. In addition, a parameter described as "uniform" within a predetermined region may refer to its average uniformity.

Throughout this specification, unless the context dictates otherwise, each component may be singular or plural.

The placement of a component "on (or below)" or "above (or beneath)" another component is to be understood as including not only the case where the component is in direct contact with the upper (or lower) surface of the other component, but also the case where another component may be interposed therebetween.

Furthermore, when a component is described as being "connected," "coupled," or "joined" to another component, it is to be understood that the components may be directly connected, coupled, or joined to each other, but also that another component may be "interposed" therebetween, or that the components may be "connected," "coupled," or "joined" through another component.

Throughout the specification, "A and/or B" shall mean A, B, or both A and B, and "C to D" shall mean a range from C to D inclusive, unless otherwise stated.

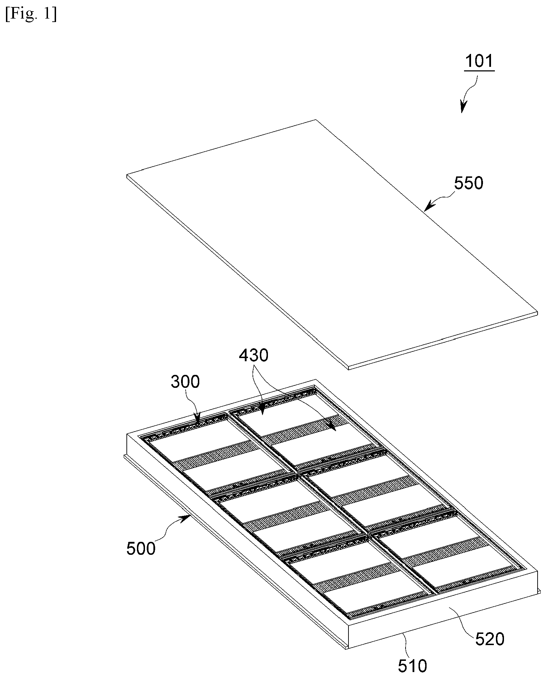

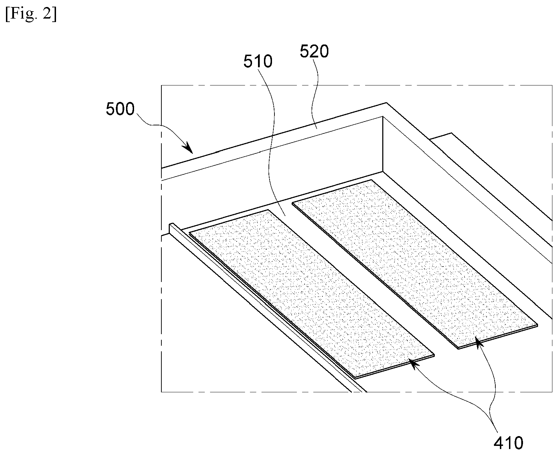

FIG. 1 is a view illustrating a battery pack (101) according to one embodiment of the present invention, and FIG. 2 is a view illustrating a first thermal resin (410) applied to a base portion (510) of a pack case (500), with the pack case (500) shown in separation.

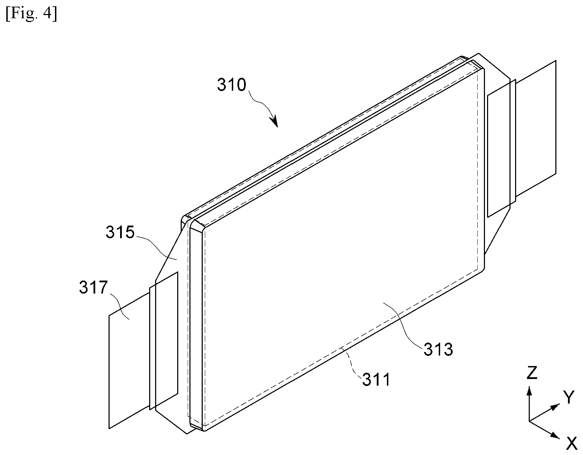

Referring to FIGS. 1 and 2, a battery pack (101) according to one embodiment of the present invention comprises a plurality of battery cell units (300), a pack case (500), a first thermal resin (410), a second thermal resin (420) (shown in FIG. 4), and at least one of a phase change material (PCM) and a third thermal resin (430).

Additionally, the battery pack (101) according to one embodiment of the present invention may further comprise a case cover (550).

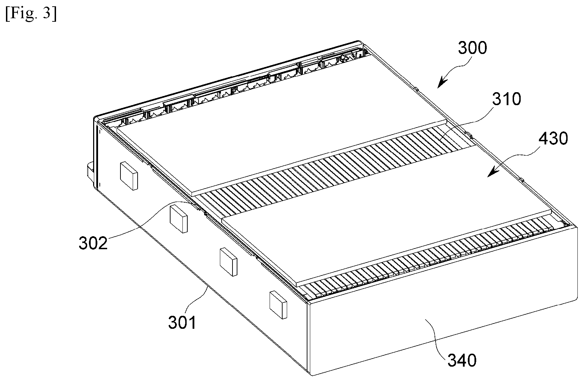

Referring to FIG. 3, a plurality of battery cell units (300) may comprise a plurality of battery cells (310) stacked in at least one direction. More specifically, a plurality of battery cells (310) can be arranged at least in a horizontal direction. That is, the plurality of battery cells (310) may be configured to be arranged side-by-side in a horizontal direction while in an upright state.

Meanwhile, the battery cell unit (300) may be manufactured by minimizing the use of any additional configuration other than the support frame (340) for maintaining the shape of the plurality of stacked battery cells (310).

Hereinafter, the battery cell (310) will be examined in more detail.

FIG. 4 is a view illustrating a battery cell (310). Referring to FIG. 4, the battery cell (310) may be a secondary battery, and may be, for example, a pouch-type battery cell (310). However, the type of battery cell (310) is not limited thereto, and other types of battery cells (310), such as prismatic cells, may also be applied to the battery pack (101) according to one embodiment of the present invention.

Hereinafter, a case in which the battery cell (310) is a pouch-type cell will be described by way of example, with reference to FIG. 4. Referring to FIG. 4, a battery cell (310) may comprise an electrode assembly (311), a receiving portion (313) for accommodating the electrode assembly (311), a sealing portion (315) formed around the receiving portion (313), and a pair of electrode leads (317) connected to the electrode assembly (311) and extending outward from the sealing portion (315).

A pair of electrode leads (317) are coupled to electrode tabs (not shown) provided in the electrode assembly (311) and may extend outward to the outside of the sealing portion (315) through the sealing portion (315). The pair of electrode leads (317) may have an elongated shape extending along the longitudinal direction of the battery cell (310). The pair of electrode leads (317) may extend in the same direction or in opposite directions from each other.

Referring again to FIGS. 1 and 2, the pack case (500) may be configured to accommodate a plurality of battery cell units (300) in an internal space. That is, the pack case (500) has an internal empty space, and may accommodate a plurality of battery cell units (300) therein. For example, the pack case (500) may have a box shape with an opening.

The pack case (500) may comprise a base portion (510) that supports the plurality of battery cell units (300), and a sidewall portion (520) that extends upward from an edge of the base portion (510) and is configured to cover the side surfaces of the plurality of battery cell units (300). In this case, the base portion (510) may be formed in a plate shape extending substantially in a horizontal direction, and the sidewall portion (520) may be formed in a plate shape extending substantially in a vertical direction. The base portion (510) and the sidewall portion (520) may be configured to be orthogonal to each other. Accordingly, the pack case (500) may comprise a square frame structure having an open side.

Meanwhile, the sidewall portion (520) of the pack case (500) may have a size corresponding to the width direction of the battery cell unit (300).

Additionally, the base portion (510) and the sidewall portion (520) of the pack case (500) may be formed as an integral body, or the base portion (510) and the sidewall portion (520) may be configured to be detachable.

A first thermal resin (410) is applied to at least a portion of one surface of the pack case (500) facing the plurality of battery cell units (300), that is, to at least a portion of the base portion (510). In this case, the first thermal resin (410) may be applied along one direction on one surface of the base portion (510) facing the battery cell units (300).

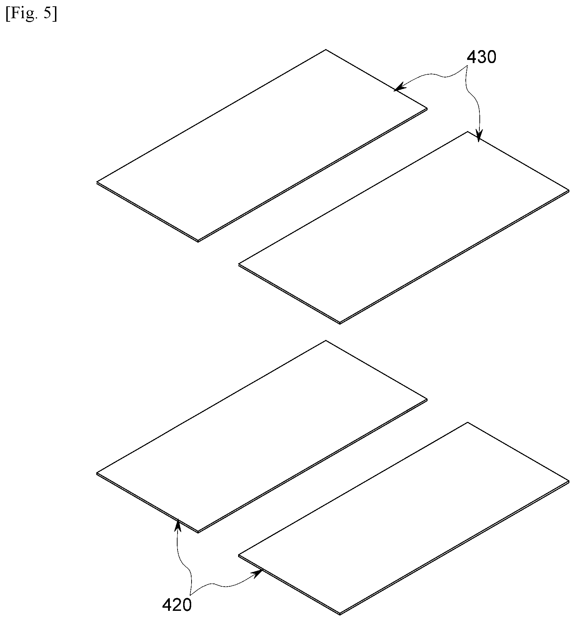

FIG. 5 is a view illustrating a second thermal resin (420) and a phase change material (PCM) or a third thermal resin (430) applied to the battery cell unit (300) of FIG. 1.

FIG. 5 shows the state in which the second thermal resin (420) and the phase change material (PCM) or the third thermal resin (430) are applied, with the battery cell unit (300) omitted for clarity. Since the second thermal resin (420) is obscured by the battery cell unit in FIG. 3, reference will be made to FIG. 5 for the subsequent description of the second thermal resin (420).

The second thermal resin (420) is applied to at least a portion of the first surface (301) of the plurality of battery cell units (300) facing the pack case (500). In this case, the second thermal resin (420) may be applied in a direction orthogonal to the application direction of the first thermal resin (410).

When the battery cell units (300) are accommodated inside the pack case (500), the second thermal resin (420) applied to the first surface (301) of the plurality of battery cell units (300) comes into contact with the first thermal resin (410) applied to the base portion of the pack case (500).

In this manner, when the first thermal resin (410) and the second thermal resin (420) are bonded to each other in different application directions, heat may be more effectively diffused, and heat concentration in a specific area may be suppressed.

At least one of the phase change material (PCM) and the third thermal resin (430) is applied to at least a portion of a second surface (302) opposite to the first surface (301) of the plurality of battery cell units (300).

That is, in one aspect of the present invention, at least one of a phase change material (PCM) and a third thermal resin (430) may be applied to the second surface (302) of a plurality of battery cell units (300).

Additionally, in another aspect of the present invention, both a phase change material and a third thermal resin (430) may be applied to the second surface (302) of a plurality of battery cell units (300).

According to one embodiment of the present invention, when the first thermal resin (410) and the second thermal resin (420) are applied between the pack case (500) and the battery cell unit (300), the heat transfer rate between the pack case (500) and the battery cell unit (300) may be increased, thereby enhancing the cooling efficiency of the battery cell (310).

Furthermore, the first thermal resin (410) and the second thermal resin (420) may prevent the battery cells (310) from sagging or separating during assembly of the battery pack (101).

A phase change material (PCM) stores or releases a large amount of heat energy through a phase change process. Accordingly, phase change materials may be used in various applications, such as latent heat storage materials, heat storage materials, cold storage materials, and thermal control materials.

A phase change material is a substance that absorbs or releases heat through a phase transition from one state to another, such as from solid to liquid, from liquid to solid, from liquid to gas, or from gas to liquid.

During the phase change process, all substances undergo a change in the physical arrangement of their molecules rather than a chemical reaction such as chemical bonding or formation. Accordingly, when the external temperature rises, the phase change material reaches its intrinsic melting point, at which time the phase change material absorbs a predetermined amount of heat, referred to as the enthalpy of fusion, as it changes phase from a solid state to a liquid state. These phase change materials remain at a constant temperature even when heat is applied.

Conversely, when the external temperature drops below the melting point of the phase change material, the phase change material releases the stored heat as it changes from a liquid state to a solid state.

These phase change materials may be broadly classified into organic and inorganic substances; although about 4,000 substances are classified as phase change materials, only about 200 are practically applicable.

Examples of organic substances include hydrocarbons composed of carbon and hydrogen, such as tetradecane, octadecane, and nonadecane, and examples of inorganic substances include calcium chloride, which is a hydrate composed of six water molecules.

The case cover (550) may be coupled to the pack case (500) so as to cover a plurality of battery cell units (300) housed inside the pack case (500). In this case, the case cover (550) can be coupled to the open side of the pack case (500).

Additionally, when the case cover (550) is coupled to the pack case (500), the case cover (550) may come into contact with at least one of the phase change material and the third thermal resin (430) applied to the second surface (302) of the battery pack unit (300).

In one aspect of the present invention, when a third thermal resin (430) is interposed between the case cover (550) and the battery cell unit (300), the heat transfer rate between the case cover (550) and the battery cell unit (300) may be increased, thereby enhancing the cooling efficiency of the battery cell (310).

In addition, in another aspect of the present invention, when a phase change material is interposed between the case cover (550) and the battery cell unit (300), heat that is rapidly generated inside the battery pack (101) may be absorbed to stably maintain an appropriate temperature.

Furthermore, in another aspect of the present invention, when both the third thermal resin (430) and the phase change material are interposed between the case cover (550) and the battery cell unit (300), both of the above-described effects may be obtained.

In addition, when one or more of the phase change material and the third thermal resin (430) are interposed between the case cover (550) and the battery cell unit (300), the phenomenon of the battery cells (310) moving or separating may be suppressed.

According to this configuration, the cooling efficiency of the battery pack (101) may be improved, and heat rapidly generated inside the battery pack (101) may be absorbed to stably maintain an appropriate temperature.

Furthermore, according to the above configuration, some of the battery cells (310) may be effectively prevented from sagging or separating during the assembly of the battery pack (101).

Hereinafter, a method for manufacturing a battery pack according to one embodiment of the present invention will be described.

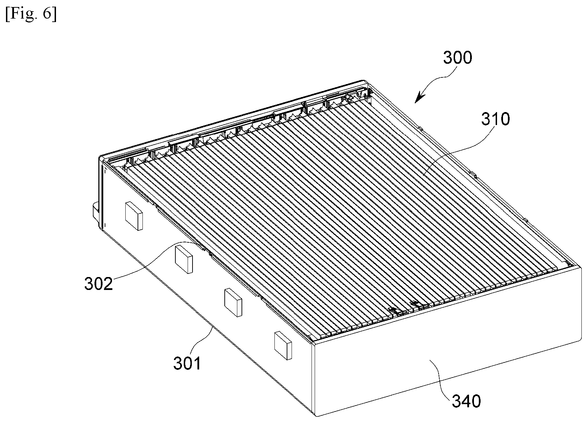

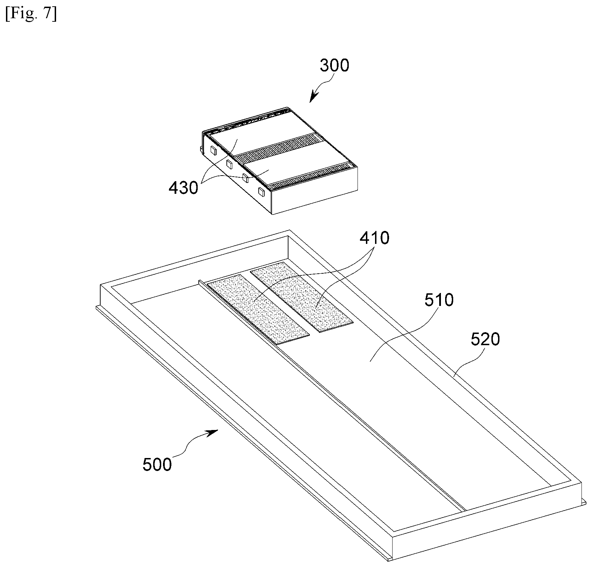

FIGS. 6 and 7 are views illustrating a method of manufacturing a battery pack (101) according to one embodiment of the present invention, together with the drawings previously described.

First, as shown in FIG. 6, the battery cell unit (300) is assembled.

The plurality of battery cell units (300) may comprise a plurality of battery cells (310) stacked in at least one direction, as described above with reference to FIG. 3.

Next, as illustrated in FIG. 2, a first thermal resin (410) is applied in one direction on the base portion (510) of the pack case (500) that accommodates the battery cell unit (300).

Next, as shown in FIGS. 3 and 5, a second thermal resin (420) is applied to a first surface (301) of the battery cell unit (300) facing the base portion (510) of the pack case (500), and at least one of a phase change material (PCM) and a third thermal resin (430) is applied to a second surface (302) of the battery cell unit (300) opposite to the first surface (301).

In this case, the second thermal resin (420) is applied in a direction orthogonal to the application direction of the first thermal resin (410).

Moreover, in one aspect of the present invention, at least one of a phase change material (PCM) and a third thermal resin (430) may be applied to the second surface (302) of a plurality of battery cell units (300).

Additionally, in another aspect of the present invention, both a phase change material and a third thermal resin (430) may be applied to the second surface (302) of a plurality of battery cell units (300).

Next, as shown in FIG. 7, the battery cell unit (300) is accommodated inside the pack case (500) so that the second thermal resin (420) is in contact with the first thermal resin (410).

In this manner, when the first thermal resin (410) and the second thermal resin (420) are bonded to each other in different application directions, heat may be more effectively diffused, and heat concentration in a specific area may be suppressed.

By repeating this process, a plurality of battery cell units (300) are sequentially accommodated in the pack case (500), and as shown in FIG. 1, the case cover (550) is coupled to the pack case (500) so as to be in contact with at least one of the phase change material and the third thermal resin (430), thereby assembling the battery pack (101).

According to this configuration, the cooling efficiency of the battery pack (101) may be improved, and heat that is rapidly generated inside the battery pack (101) may be absorbed to stably maintain an appropriate temperature.

Furthermore, according to this method, it is possible to effectively prevent some battery cells (310) from sagging or separating during assembly of the battery pack (101).

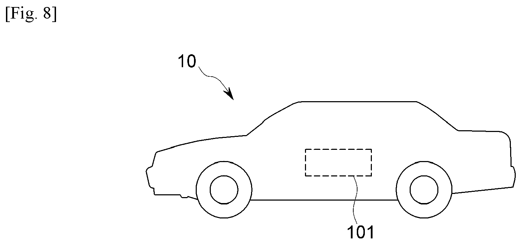

FIG. 8 is a view illustrating a vehicle (10) including the battery pack (101) of FIG. 1.

Referring to FIG. 8, a vehicle (10) according to the present invention may comprise at least one battery pack (101). A vehicle (10) according to one embodiment of the present invention may be, for example, an electric vehicle, a hybrid vehicle, or a plug-in hybrid vehicle, and comprises a battery pack (101) according to one embodiment of the present invention. The vehicle (10) may comprise four-wheeled vehicles and two-wheeled vehicles. The vehicle (10) operates by receiving power from the battery pack (101) according to one embodiment of the present invention. In addition, the vehicle (10) according to the present invention may further include various other components included in the vehicle in addition to the battery cell (310) or the battery pack (101). For example, a vehicle (10) according to the present invention may further include, in addition to a battery cell (310) according to the present invention, a vehicle body, a motor, and a control device such as an electronic control unit (ECU).

Meanwhile, although terms indicating directions such as up and down are used in this specification, it is obvious to those skilled in the art that these terms are only for convenience of explanation and may vary depending on the location of the target object or the location of the observer.

While the present invention has been described with reference to the limited embodiments and the accompanying drawings, the present invention is not limited thereto, and it is to be understood that various modifications and variations can be made by those of ordinary skill in the art to which the present invention pertains within the technical spirit of the present invention and the scope of the appended claims and their equivalents.

### [REFERENCE NUMERALS]

10: Vehicle
101: Battery Pack
300: Battery Cell Unit
301: First Surface
302: Second Surface
310: Battery Cell
311: Electrode Assembly
313: Receiving Portion
315: Sealing Portion
317: Electrode Lead
340: Support Frame
410: First Thermal Resin
420: Second Thermal Resin
430: Phase Change Material or Third Thermal Resin
500: Pack Case
510: Base Portion
520: Sidewall Portion
550: Case Cover

### [INDUSTRIAL APPLICABILITY]

The present invention can be used to absorb heat rapidly dissipated inside a battery pack and stably maintain an appropriate temperature.

## Claims

1. A battery pack, comprising:
a plurality of battery cell units;
a pack case accommodating the plurality of battery cell units therein;
a first thermal resin disposed on at least a portion of a surface of the pack case facing the plurality of battery cell units;
a second thermal resin applied to at least a portion of a first surface of the plurality of battery cell units facing the pack case; and
at least one of a phase change material (PCM) or a third thermal resin disposed on at least a portion of a second surface of the plurality of battery cell units, the second surface being opposite to the first surface.

2. The battery pack of claim 1, wherein the pack case comprises:
a base portion supporting the plurality of battery cell units; and
a sidewall portion extending from an edge of the base portion and covering side surfaces of the plurality of battery cell units,
wherein the first thermal resin extends along one direction on a surface of the base portion facing the battery cell units.

3. The battery pack of claim 1, wherein each of the plurality of battery cell units comprises a plurality of battery cells stacked in at least one direction, and a support frame configured to maintain an arrangement shape of the plurality of battery cells.

4. The battery pack of claim 1, wherein the second thermal resin extends along a direction orthogonal to an application direction of the first thermal resin.

5. The battery pack of claim 1, wherein the battery cell units are accommodated inside the pack case such that the second thermal resin is in contact with the first thermal resin.

6. The battery pack of claim 1, wherein both the phase change material and the third thermal resin are applied on the second surface of the plurality of battery cell units.

7. The battery pack of claim 1, further comprising a case cover coupled to the pack case and covering the plurality of battery cell units accommodated inside the pack case,
wherein the case cover is coupled to the pack case in contact with at least one of the phase change material or the third thermal resin.

8. A vehicle, comprising at least one battery pack as recited in any one of claims 1 to 7.

9. A method for manufacturing a battery pack, the method comprising:
assembling a battery cell unit;
applying a first thermal resin along one direction on a base portion of a pack case that is configured to accommodate the battery cell unit therein;
applying a second thermal resin to a first surface of the battery cell unit that is configured to face the base portion of the pack case;
applying at least one of a phase change material or a third thermal resin to a second surface of the battery cell unit opposite to the first surface; and
accommodating the battery cell unit inside the pack case.

10. The method of claim 9, wherein during the accommodating of the battery cell unit inside the pack case, the second thermal resin applied to the first surface of the battery cell unit comes into contact with the first thermal resin.

11. The method of claim 9, wherein the second thermal resin is applied along a direction orthogonal to an application direction of the first thermal resin.

12. The method of claim 9, wherein both the phase change material and the third thermal resin are applied on the second surface of the battery cell unit.

13. The method of claim 9, further comprising covering the battery cell unit accommodated inside the pack case by coupling a case cover to the pack case in contact with at least one of the phase change material or the third thermal resin.
